# EUROPÄISCHE PATENTSCHRIFT

(11) **EP 2 510 785 B1**
(45) Veröffentlichungstag und Bekanntmachung des Hinweises auf die Patenterteilung: **28.08.2013**
(21) Anmeldenummer: 12401058.8
(22) Anmeldetag: 02.04.2012
(51) Int. Cl.: A01M 7/00

(54) **Landwirtschaftliche Feldspritze**
Agricultural field spraying device
Pulvérisateur agricole à cultures

(30) Priorität: 12.04.2011 DE 102011001967
(43) Veröffentlichungstag der Anmeldung: 17.10.2012
(73) Patentinhaber: Amazonen-Werke H. Dreyer GmbH & Co. KG, 49205 Hasbergen (DE)
(72) Erfinder: Austermann, Stefan, 48291 Telgte (DE)

(56) Entgegenhaltungen:
- EP-A1- 0 916 259
- EP-A2- 1 958 506
- JP-A- 10 156 241

## Beschreibung

Die Erfindung betrifft eine landwirtschaftliche Feldspritze gemäß des Oberbegriffes des Patentanspruches 1.

Derartige landwirtschaftliche Feldspritzen sind in der Praxis bekannt geworden (vgl. z.B. EP0916259 A1). Diese Feldspritzen weisen einen Flüssigkeitstank auf. In diesem Flüssigkeitstank ist zu dessen Innenreinigung eine zumindest eine Reinigungsdüse aufweisende Reinigungseinrichtung angeordnet. Die Reinigungseinrichtung ist an den von der motorisch angetriebenen Pumpe erzeugten unter Druck stehenden Flüssigkeitsstromkreis angeschlossen. Von diesem Flüssigkeitsstromkreis wird der Reinigungsdüse zur Innenreinigung Flüssigkeit zugeführt. Damit die aus den Reinigungsdüsen austretende Flüssigkeitsmenge an die Flüssigkeitsausbringmenge der Feldspritze angepasst ist, müssen bei den bekannten Feldspritzen entsprechend in ihrer Größe angepasste Reinigungsdüsen von Hand in die Halterungen der Reinigungseinrichtung eingebaut werden. Hierdurch werden verschiedene auf den Flüssigkeitsmengenausstoß der Ausbringdüsen angepasste Innenreinigungsdüsen an den Halterungen der Reinigungsvorrichtung eingebaut. Die Anpassung ist erforderlich, damit bei dem Ausbringvorgang, wenn die Innenreinigung des Flüssigkeitstanks durchgeführt wird, der Flüssigkeitstank auch bei aktiver Innenreinigung problemlos entleert werden kann.

Der Erfindung liegt die Aufgabe zu Grunde, in einfacher Weise es zu ermöglichen, dass die von den Innenreinigungsdüsen ausgebrachte Flüssigkeitsmenge an die von den Ausbringdüsen auf dem Feld ausgebrachte Flüssigkeitsmenge angepasst werden kann.

Diese Aufgabe wird erfindungsgemäß dadurch gelöst, dass Mittel vorhanden sind, über welche der Reinigungsdüse bei dem Reinigungsvorgang des inneren Bereiches des Flüssigkeitstanks innerhalb definierter Zeitintervalle Flüssigkeit zugeführt wird und zwar derart, dass die beim Reinigungsvorgang über die Reinigungsdüsen dem Flüssigkeitstank zugeführte Reinigungsflüssigkeitsmenge während des Reinigungsvorganges kleiner als die während des Reinigungsvorganges über die Ausbringleitung ausgebrachte Flüssigkeitsmenge ist, und dass zur Aufrechterhaltung des für den Reinigungsvorgang erforderlichen Betriebsmitteldruckes den Reinigungsdüsen die Reinigungsflüssigkeit in definierten Zeitintervallen impulsweise über die Dosiereinrichtung zugeführt wird.

Infolge dieser Maßnahmen werden die Innenreinigungsdüsen in grundsätzlicher Weise so angesteuert, dass die aus den Innenreinigungsdüsen austretende Flüssigkeitsmenge trotz eines konstanten Drucks in dem ausgebrachten Flüssigkeitsstrom verändert und an die tatsächlich vorherrschenden Einsatzbedingungen angepasst werden kann. Somit brauchen keine verschiedenen Düsen für variierende Ausbringmengen an der Innenreinigungsvorrichtung angebaut werden. Die Reinigung wird somit effizienter und mit weniger Wasser bei gleichbleibend hohem Druck möglich. Der Innenreinigungsvorgang lässt sich somit in einfacher Weise kontinuierlich durchführen.

Eine einfache Veränderung und Anpassung der aus den Innenreinigungsdüsen austretenden Flüssigkeitsmenge zur Innenreinigung des Flüssigkeitstank lässt sich dadurch erreichen, dass die Dosiereinrichtung über eine elektronische Regeleinrichtung impulsweise ansteuerbare Ventilelemente, die der Reinigungseinrichtung zugeordnet sind, aufweist.

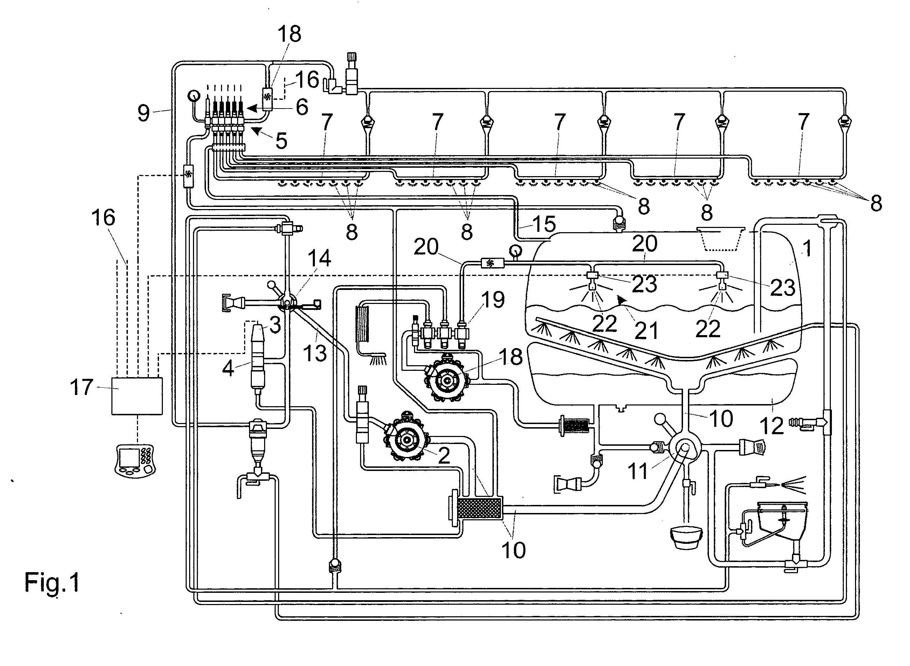

Weitere Einzelheiten der Erfindung sind der Beispielsbeschreibung und den Zeichnungen zu entnehmen. Hierbei zeigen
- Fig. 1: den Flüssigkeitsplan einer Feldspritze in Prinzipdarstellung

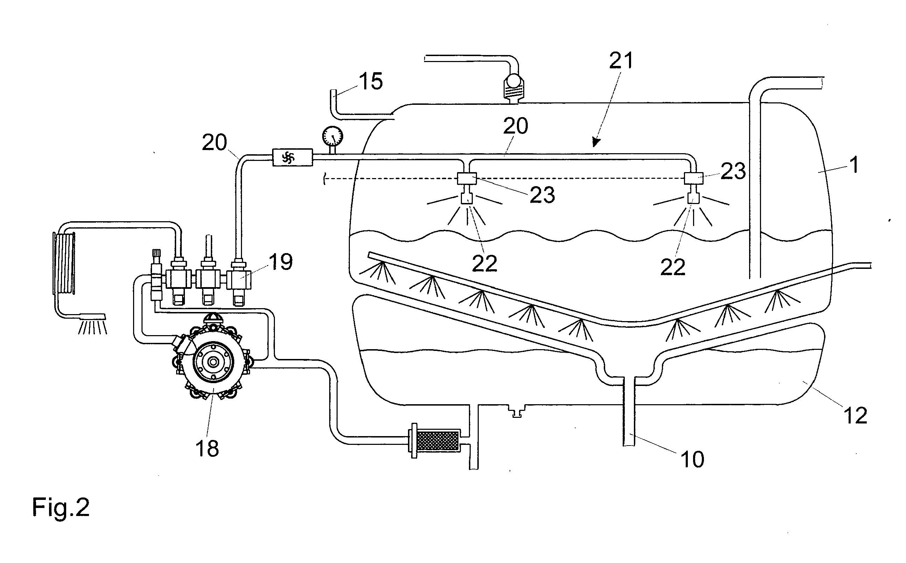

- Fig. 2: einen Teilbereich des Flüssigkeitsplanes gemäß Fig. 1,
- Fig. 3: ein Mengendiagramm, in welchem die aus den in dem Vorratstank angeordneten Reinigungsdüsen ausgebrachte Flüssigkeitsmenge eingetragen ist,
- Fig. 4: ein weiteres Mengendiagramm, in welchem die aus den in dem Vorratstank angeordneten Reinigungsdüsen ausgebrachte Flüssigkeitsmenge eingetragen ist und
- Fig. 5: ein weiteres Mengendiagramm, in welchem die aus den in dem Vorratstank angeordneten Reinigungsdüsen ausgebrachte Flüssigkeitsmenge eingetragen ist.

Die Feldspritze weist unter anderem einen Flüssigkeitstank 1 zur Aufnahme der auszubringenden Pflanzenschutzmittelbrühe, eine motorisch angetriebene Pumpe 2, ein über einen Stellmotor 3 einstellbares Regelventil 4 aufweisende Dosierarmatur, die Teilbreitenschaltventile 5 mit den motorischen Einstellgliedern 6, die zu den einzelnen Teilbreitenleitungen 7 mit Spritzdüsen 8 bestückten Verteilergestänge führende Spritzleitung 9 auf.

Auf der Saugseite der Pumpe 2 ist die Saugleitung 10 angeschlossen, die unter Zwischenschaltung eines zentralen Umschaltventils 11 im unteren Bereich des Flüssigkeitstank 1 mündet. An dem Umschaltventil 11 können noch weitere Leitungen zum externen Anschluss von Wassertanks, Vorrichtungen zum Ansaugen von Wasser aus Gewässern, zum Anschluss des Klarwasserbehälters 12 sowie eine Ablaufleitung angeschlossen sein. Auf der Druckseite der Pumpe 2 ist eine Druckleitung 13 angeordnet, die unter Zwischenschaltung eines weiteren Umschaltventils 14 zu dem Regelventil 4 der Dosierarmatur und weiterer Einrichtungen der Feldspritze führt. Die verschiedenen Rücklaufleitungen sind zu einer Sammelrücklaufleitung 15 zusammengefasst. Die Rücklaufleitung 15 mündet in dem Vorratstank 1.

In der von den dem Regelventil 4 zu den Teilbreitenleitungen 7 führenden Spritzleitung 9 ist der über die Signalleitung 16 mit der elektronischen Steuer- und/oder Regeleinrichtung 17 verbundene Durchflussmesser 18 angeordnet.

Unterhalb des Flüssigkeitstanks 1 ist der Klarwasserbehälter 12 zur Aufnahme von Klarwasser angeordnet. Diesem Klarwasserbehälter 12 ist eine zweite Pumpe 18, Regelventile 19 sowie die von den Regelventilen 19 abgehende Reinigungsleitung 20 einer Reinigungseinrichtung 21 für die Innenreinigung des Flüssigkeitstanks 1 auf. An der Reinigungsleitung 20 sind im Flüssigkeitstank 1 mehrere Reinigungsdüsen 22 angeordnet.

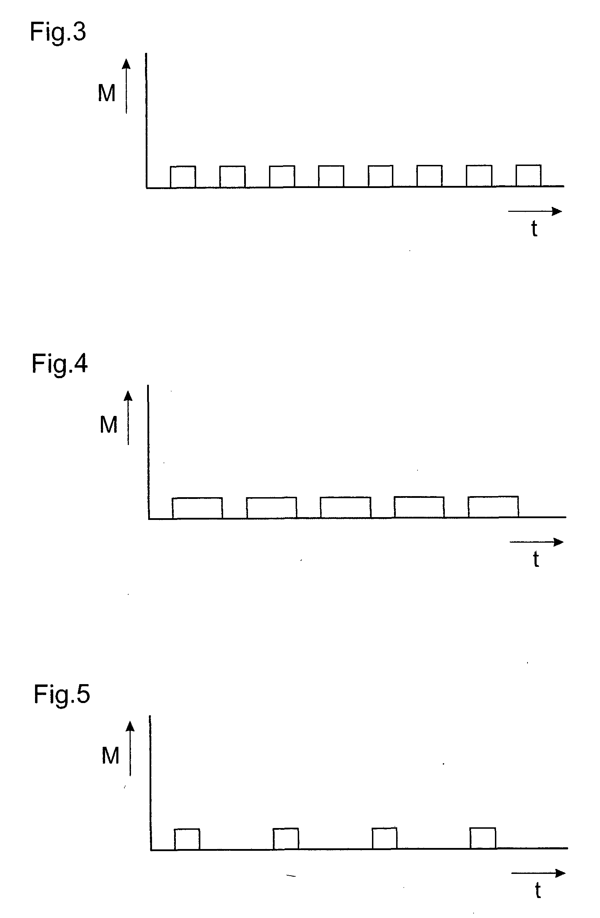

In der Reinigungsleitung 20 sind über die elektronische Steuer- und/oder Regeleinrichtung 17 impulsweise ansteuerbare Ventilelemente 23 der Reinigungseinrichtung 21 angeordnet. An den Ventilelementen 23 sind die Reinigungsdüsen 22 angeordnet. Mittels der von der elektronische Steuer- und/oder Regeleinrichtung 17 ansteuerbaren Ventilelemente 23 wird den Innenreinigungsdüsen 22 bei dem Reinigungsvorgang des inneren Bereiches des Flüssigkeitstanks 1 innerhalb definierter Zeitintervalle Flüssigkeit zugeführt und zwar derart, dass die beim Reinigungsvorgang über die Reinigungsdüsen dem Flüssigkeitstank 1 zugeführte Reinigungsflüssigkeitsmenge während des Reinigungsvorganges kleiner als die während des Reinigungsvorganges über die Ausbringleitung ausgebrachte Flüssigkeitsmenge ist. Über die impulsweise angesteuerten Ventilelemente 23 wird zur Aufrechterhaltung des für den Reinigungsvorgang erforderlichen Betriebsmitteldruckes den Innenreinigungsdüsen die Reinigungsflüssigkeit in definierten Zeitintervallen impulsweise über die Dosiereinrichtung zugeführt, wie in dem jeweiligen Mengendiagramm für unterschiedliche Ausbringmengenraten in den Fig. 3 bis 5 dargestellt ist.

Hierdurch ist es möglich, dass trotz Zuführung von Flüssigkeit in den Flüssigkeitstank 1 während des Reinigungsvorganges zur Innenreinigung des Flüssigkeitstanks 1, der Flüssigkeitstank 1 über die Pumpe 2 entleert werden kann.

Das Mengendiagramm gemäß Fig. 3 zeigt eine mittlere Menge von zugeführter Reinigungsflüssigkeit über die Ventilelemente 23 und Innenreinigungsdüsen 22 zur Innenreinigung des Flüssigkeitstanks 1.

Das Mengendiagramm gemäß Fig. 4 zeigt eine größere Menge von zugeführter Reinigungsflüssigkeit über die Ventilelemente 23 und Innenreinigungsdüsen 22 zur Innenreinigung des Flüssigkeitstanks 1 als in Fig. 3.

Das Mengendiagramm gemäß Fig. 5 zeigt eine kleinere Menge von zugeführter Reinigungsflüssigkeit über die Ventilelemente 23 und Innenreinigungsdüsen 22 zur Innenreinigung des Flüssigkeitstanks 1 als in Fig. 3.

Hierbei ist die die Mengenzuführung der Reinigungsflüssigkeit über die Ventilelemente 23 so gewählt, dass maximal 90 % der von der Pumpe 2 geförderten auszubringenden Spritzflüssigkeitsmenge an Reinigungsflüssigkeit zugeführt wird.

## Patentansprüche

1. Landwirtschaftliche Feldspritze mit zumindest einem Flüssigkeitstank (1), einer angetriebenen Flüssigkeitspumpe (2), zumindest einer Dosiereinrichtung (3,4) mit zumindest einer zugeordneten Ausbringleitung und zumindest einer dem Flüssigkeitstank (1) zu dessen Innenreinigung zumindest eine Reinigungsdüse (22) aufweisenden Reinigungseinrichtung (21), wobei Mittel (17, 23) vorgesehen sind, über welche der Reinigungsdüse (22) bei dem Reinigungsvorgang des inneren Bereiches des Flüssigkeitstanks (1) innerhalb definierter Zeitintervalle Flüssigkeit zugeführt wird **dadurch gekennzeichnet, dass** die beim Reinigungsvorgang über die Reinigungsdüsen (22) dem Flüssigkeitstank (1) zugeführte Reinigungsflüssigkeitsmenge während des Reinigungsvorganges kleiner als die während des Reinigungsvorganges über die Ausbringleitung ausgebrachte Flüssigkeitsmenge ist, und dass zur Aufrechterhaltung des für den Reinigungsvorgang erforderlichen Betriebsmitteldruckes den Reinigungsdüsen (22) in die Reinigungsflüssigkeit in definierten Zeitintervallen impulsweise über die Dosiereinrichtung zugeführt wird.

2. Landwirtschaftliche Feldspritze nach Anspruch 1, **dadurch gekennzeichnet, dass** die Dosiereinrichtung über eine elektronische Steuer- und/oder Regeleinrichtung (17) impulsweise ansteuerbare Ventilelemente (23), die der Reinigungseinrichtung (21) zugeordnet sind, aufweist.

## Claims

1. Agricultural field spraying device with at least one liquid tank (1), a driven liquid pump (2), at least one metering device (3, 4) having at least one associated discharge line, and with at least one cleaning device (21) having at least one cleaning nozzle (22) arranged in the liquid tank (1) for the internal cleaning thereof, wherein means (17, 23) are provided, via which the cleaning nozzle (22) is supplied with liquid within defined time intervals during the cleaning operation of the interior region of the liquid tank (1), **characterized in that** the quantity of cleaning liquid supplied to the liquid tank (1) via the cleaning nozzles (22) for the cleaning operation is smaller during the cleaning operation than the quantity of liquid discharged via the discharge line during the cleaning operation, and **in that**, in order to maintain the operating material pressure required for the cleaning operation, the cleaning liquid is fed to the cleaning nozzles (22) at defined time intervals in a pulsed manner via the metering device.

2. Agricultural field spraying device according to Claim 1, **characterized in that** the metering device has valve elements (23) which are activatable in a pulsed manner via an electronic control and/or regulating device (17) and are assigned to the cleaning device (21).

## Revendications

1. Pulvérisateur agricole à cultures comprenant au moins un réservoir de liquide (1), une pompe de liquide entraînée (2), au moins un dispositif de dosage (3, 4) avec au moins une conduite de distribution associée et au moins un dispositif de nettoyage (21) présentant au moins une buse de nettoyage (22) disposée dans le réservoir de liquide (1) pour le nettoyage interne de celui-ci, des moyens (17, 23) étant prévus, par le biais desquels du liquide est acheminé, dans un intervalle de temps défini, à la buse de nettoyage (22) lors de l'opération de nettoyage de la zone interne du réservoir de liquide (1), **caractérisé en ce que** la quantité de liquide de nettoyage acheminée au réservoir de liquide (1) lors de l'opération de nettoyage par le biais des buses de nettoyage (22) pendant l'opération de nettoyage est inférieure à la quantité de liquide délivrée pendant l'opération de nettoyage par le biais de la conduite de distribution et **en ce que** pour maintenir la pression de milieu de travail nécessaire pour l'opération de nettoyage, on achemine aux buses de nettoyage (22) le liquide de nettoyage dans des intervalles de temps définis par impulsion par le biais du dispositif de dosage.

2. Pulvérisateur agricole à cultures selon la revendication 1, **caractérisé en ce que** le dispositif de dosage présente des éléments de soupape (23) pouvant être commandés par impulsion par le biais d'un dispositif de commande et/ou de régulation électronique (17), lesquels sont associés au dispositif de nettoyage (21).
